Europäisches Patentamt

European Patent Office

Office européen des brevets

(11) Numéro de publication: **0 157 056**
A1

## (12) DEMANDE DE BREVET EUROPEEN

(21) Numéro de dépôt: 84400632.0

(22) Date de dépôt: 29.03.84

(51) Int. Cl.⁴: **G 11 B 23/03, A 47 F 7/024**

(43) Date de publication de la demande: 09.10.85
**Bulletin 85/41**

(84) Etats contractants désignés: **AT BE CH DE FR GB IT LI LU NL SE**

(71) Demandeur: **Guillot, Robert, Résidence Port-Issol, F-83110 Sanary sur Mer (FR)**
Demandeur: **Lalue, Michel, Les Escouradières, F-83230 Le Beausset (FR)**

(72) Inventeur: **Guillot, Robert, Résidence Port-Issol, F-83110 Sanary sur Mer (FR)**
Inventeur: **Lalue, Michel, Les Escouradières, F-83230 Le Beausset (FR)**

(74) Mandataire: **Pinguet, André, CAPRI 28 bis, avenue Mozart, F-75016 Paris (FR)**

(54) **Dispositif pour la présentation et le rangement des disques compacts.**

(57) Le dispositif comprend une boîte plate rectangulaire (1, 2) dont les dimensions sont sensiblement celles des étuis et coffrets de microsillons 33 tours, de façon à pouvoir se loger dans un bac à disques non modifié, le fond (1) et le dessus (2) de la boîte présentant des fenêtres (5, 6, 9, 10) déterminant des feuillures internes autour de la boîte, de façon à pouvoir y recevoir des étuis plats visibles par les fenêtres de la boîte et maintenus à l'intérieur de celle-ci par leurs bords. Cette boîte peut être placée parmi d'autres boîtes analogues et parmi des 33 tours dans un bac, qu'il n'est pas nécessaire de modifier. La boîte ferme à clé. Une fixation dans de bac peut être prévue.

Dispositif pour la présentation et le rangement des disques compacts.

La présente invention a pour objet un dispositif pour la présentation et le rangement des disques compacts. Un tel dispositif peut être désigné un présentoir car il permet l'examen à loisir par les chalands la collection des disques compacts présentés. L'invention vise plus particulièrement un dispositif de sécurité permettant de prémunir le commerçant contre le vol.

Jusqu'à maintenant, on a proposé des présentoirs fixés ou articulés sur un mur ou sur un comptoir, comportant des séries de canaux dans les feuillures desquels on peut glisser des cassettes (voir B FR 2 440 176 et B GB 1 459 996). Ces présentoirs comportent une serrure. Les cassettes proposées sont ainsi enfermées dans ces présentoirs qui sont solidaires d'un mur ou d'un meuble. Il est alors impossible de dérober une cassette sans utilisation d'une clef. S'ils apportent bien la sécurité, ces présentoirs rendent nécessaires des aménagements importants à l'occasion de l'introduction sur le marché de produits d'un format différent, comme cela est le cas pour les disques compacts (à laser).

Les disques compacts sont d'un format réduit (environ 12 cm de diamètre), ce qui présente des avantages à différents points de vue, mais permet en revanche de les dérober et de les dissimuler plus facilement. Le dispositif de l'invention a pour but de présenter les disques compacts au public, tout en supprimant les possibilités de vol.

Conformément à la présente invention, un dispositif pour la présentation et le rangement de disques compacts dans un magasin de vente est remarquable notamment en ce qu'il comporte des moyens pour solidariser ensemble sous la commande d'une serrure plusieurs disques compacts dans un même plan, de façon à former un ensemble de dimensions supérieures suffisantes pour prévenir la dissimulation et le vol.

Selon l'invention, la prévention contre le vol n'est pas obtenue par un système d'attache quelconque, mais par un accroissement de la dimension, rendant impossible la dissimulation et le vol. On sait que l'on a déjà utilisé, pour des microcassettes, des supports groupant plusieurs microcassettes de façon à les loger dans un étui de cassette standard (voir en particulier la demande de brevet PCT 83/ 00768 de Macenpat).La taille d'une cassette standard est très insuffisante pour constituer un obstacle au vol. Ce dispositif sans serrure permettrait tout au plus de placer les ensembles de microcassettes ainsi formés dans un présentoir du type décrit dans les deux brevets cités au début.

Un autre but de l'invention est de permettre la présentation des disques compacts sans modifier l'installation du magasin où ils sont exposés. Un autre but encore est de permettre au commerçant de présenter sur les mêmes rayons des disques microsillons et des disques compacts, sans avoir à modifier aucune installation.

Ce résultat est obtenu conformément à la présente invention, par le fait que les dimensions supérieures choisies pour l'ensemble sont celles d'un disque 33 tours microsillons.

Il est ainsi possible d'utiliser sans modification les bacs de présentation des disques 33 tours d'un magasin pour y offrir des disques compacts et de proposer dans le même bac des disques 33 tours et des disques compacts.

D'autres caractéristiques de l'invention apparaîtront au cours de la description qui va suivre, donnée, à titre d'exemple non limitatif en regard des dessins ci-joints et qui fera bien comprendre comment l'invention peut être réalisée.

Sur les dessins :
- la figure 1 est une vue en perspective d'un dispositif selon l'invention, représenté ouvert et vide ; et,

- la figure 2 est une vue de face de ce dispositif, représenté fermé et garni.

Le dispositif de l'invention peut se présenter sous la forme d'une boîte plate 1, avec un couvercle 2, qui peut par exemple être articulé en 3, 4 sur la boîte. Le fond de la boîte présente deux fenêtres 5, 6 laissant autour d'elles des bords 5a, 5b, 5c et 6a, 6b, 6c. Le couvercle 2 présente également deux fenêtres 9, 10 en regard des fenêtres 5, 6 quand le couvercle est rabattu sur la boîte. Les fenêtres peuvent être de simples ouvertures. Elles peuvent être garnies d'un matériau transparent, verre, plastique, etc... La boîte peut présenter en son milieu une nervure 12, prévue pour être horizontale.

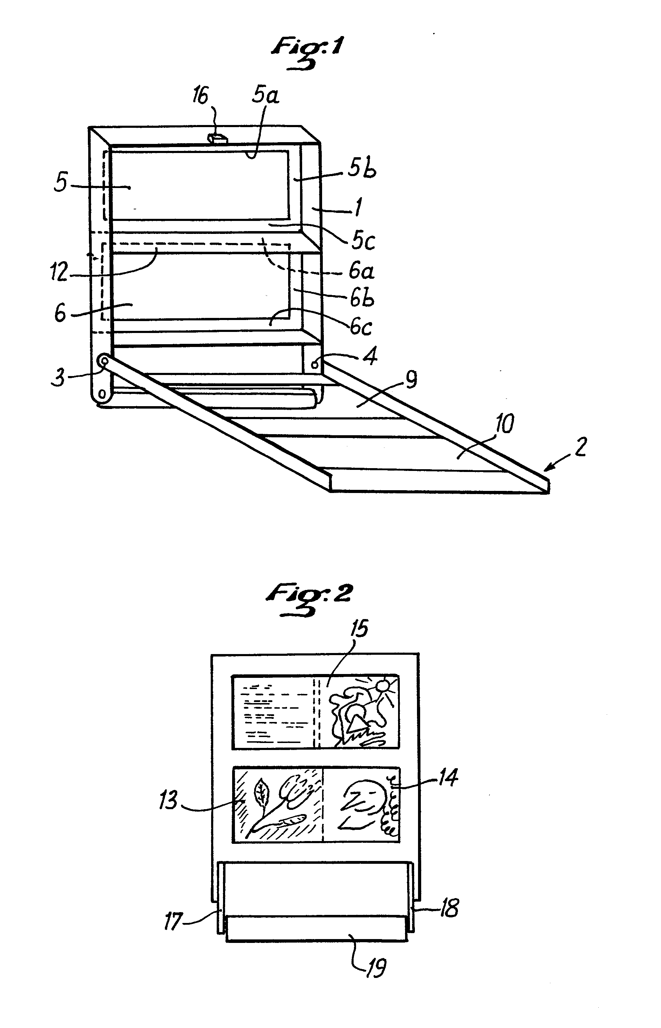

Les dimensions de la boîte sont sensiblement celles d'une pochette ou d'un coffret d'emballage de disque 33 tours, c'est-à-dire environ 30 cm de côté. Cela permet de placer une telle boîte dans un bac à disques, parmi des disques 33 tours ou parmi d'autres boîtes analogues. Avec de telles dimensions, on peut placer facilement quatre disques compacts, par exemple deux au-dessus et deux au-dessous de la nervure 12, comme les deux étuis 13, 14. On peut aussi placer des pochettes ouvertes, comme la pochette 15, figure 2, permettant l'observation d'un seul côté du recto et du verso de l'étui.

La boîte devra normalement comporter une serrure 16 de façon à ne pouvoir être ouverte que par une personne autorisée. La serrure peut êtredu type à fermeture par simple pression. L'ouverture peut être commandée par une clé, un code, une carte magnétique ou tout autre dispositif équivalent.

Avantageusement, les montants latéraux de la boîte 1 sont prolongés vers le bas en 17, 18 et l'on peut prévoir des moyens de fixation de la boîte dans le bac, tels par exemple qu'une entretoise 19 placée entre les prolongements 17, 18

0157056

à un certain écart de la boîte, parallèlement à un côté de celle-ci. De préférence, l'entretoise 19 peut tourner sur elle-même. Ainsi, cette entretoise 19 pourra être fixée dans le fond du bac à disques, par vis, clous ou analogue, ou une tringle peut être passée entre l'entretoise 19 et la boîte 1. Il sera ainsi impossible de retirer la boîte du bac à disques. Les prolongements 17, 18 peuvent aussi porter des ergots extérieurs ou intérieurs prévus pour coulisser dans des rails.

En variante, au lieu de rabattre le couvercle pour ouvrir la boîte, il pourrait être monté à glissière. Ce pourrait aussi être simplement un montant latéral de la boîte qui s'efface, par pivotement ou glissement en laissant dégagées des fentes dans lesquelles on peut glisser des étuis de disques compacts, ou par lesquelles on peut les faire sortir de la boite. De tels moyens sont connus et il n'est pas nécessaire de les décrire en détail. On pourra se référer aux deux brevets cités au début de la présente description.

L'idée en somme c'est de placer les disques compacts dans un support plus grand, associant plusieurs disques, pour rendre leur manipulation moins discrète et d'adapter cette forme plus grande à celle des grands disques actuels ; subsidiairement, fixer ce support à un élément statique du magasin.

Il va de soi que le mode de réalisation décrit n'est qu'un exemple et qu'il serait possible de le modifier, notamment par substitution d'équivalents techniques, sans sortir pour cela du cadre de l'invention.

0157056

Revendications

1. Dispositif pour la présentation et le rangement de disques compacts dans un magasin de vente, caractérisé en ce qu'il comporte des moyens (1, 2) pour solidariser ensemble sous la commande d'une serrure (16) plusieurs disques compacts dans un même plan de façon à former un ensemble de dimensions supérieures suffisantes pour prévenir la dissimulation et le vol.

2. Dispositif selon la revendication 1, caractérisé en ce que les moyens (1, 2) pour solidariser ensemble plusieurs disques compacts ont des dimensions qui sont celles d'un disque 33 tours microsillon.

3. Dispositif selon une des revendications 1 ou 2, caractérisé en ce que les moyens (1, 2) pour solidariser ensemble plusieurs disques sont constitués par une boite constituée de façon en soi connue par un fond (1) et un dessus (2), présentant des fenêtres (5, 6, 9, 10) déterminant des feuillures internes autour des fenêtres, de façon à pouvoir y recevoir des étuis plats, visibles par les fenêtres de la boite, et maintenus à l'intérieur de celle-ci par leurs bords.

4. Dispositif selon une des revendications 1 à 3, caractérisé en ce que le couvercle (2) est articulé sur un côté du fond (1) de la boite.

5. Dispositif selon une des revendications 1 à 3, caractérisé en ce que le couvercle (2) est monté à glissière sur le fond (1) de la boite.

1/1      0157056

*Fig.1*

*Fig.2*

Office européen
des brevets

**RAPPORT DE RECHERCHE EUROPEENNE**

0157056

Numéro de la demande

EP 84 40 0632

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | DE-U-7 013 223 (DEUTSCHE GRAMMOPHON) * Revendication 1; figures 1,2 * | 1 | G 11 B 23/03 A 47 F 7/024 |
| A | US-A-4 243 142 (D.O. FOREMAN) * Abrégé; figure 1* | | |
| A | DE-A-2 209 863 (G. KIEVES) * Revendication 1; figures 1,2 * | | |
| D,A | WO-A-8 300 768 (MACENPAT) | | |
| D,A | GB-A-1 459 996 (P.J. HENDERSON) | | |
| D,A | FR-A-2 440 176 (E.G. DELBECQUE) | | |

DOMAINES TECHNIQUES RECHERCHES (Int. Cl.4)

A 47 F 3/00
A 47 F 7/00
G 11 B 23/00
G 11 B 33/00

Le présent rapport de recherche a été établi pour toutes les revendications

| Lieu de la recherche | Date d'achèvement de la recherche | Examinateur |
|---|---|---|
| BERLIN | 16-11-1984 | ROGNONI M.G.L. |